# EUROPÄISCHE PATENTSCHRIFT

(11) **EP 2 154 590 B1**
(45) Veröffentlichungstag und Bekanntmachung des Hinweises auf die Patenterteilung: **03.08.2011**
(21) Anmeldenummer: 08014216.9
(22) Anmeldetag: 08.08.2008
(51) Int. Cl.: G05B 19/042, H04L 29/12

(54) **Steckplatzerkennung in einem modular aufgebauten Steuerungsgerät**
Slot recognition in a modular control device
Reconnaissance de position enfichable dans un appareil de commande modulaire

(43) Veröffentlichungstag der Anmeldung: 17.02.2010
(73) Patentinhaber: Siemens Aktiengesellschaft, 80333 München (DE)
(72) Erfinder: Beyer, Hans-Jürgen, 08134 Wildenfels (DE); Griessbach, Gunter, 09423 Gelenau (DE)

(56) Entgegenhaltungen:
- US-A1- 2001 054 102
- US-A1- 2005 010 698

## Beschreibung

Die Erfindung betrifft ein Verfahren zur Steckplatzerkennung von Steuerungsmodulen in einem modular aufgebauten Steuerungsgerät.

Modular aufgebaute Steuerungsgeräte wie Speicherprogrammierbare Steuerungen (SPS) bestehen in der Regel aus einem Modul zur Stromversorgung, einer Verarbeitungseinheit sowie weiteren Modulen, welche über einen Kommunikationsbus mit der Verarbeitungseinheit verbunden sind und welche Ein- und Ausgänge für die Aktoren und Sensoren aufweisen. Hierbei sind die Steuerungsmodule an einem gemeinsamen Kommunikationsbus angeschlossen. Sie benötigen daher eine eindeutige Kennzeichnung am Bus. Dies ist im Allgemeinen die dem jeweiligen Steuerungsmodul zugeordnete Modul- bzw. Steckplatzadresse. Mit Hilfe dieser Adresse wird der ordnungsgemäße Datentransport zwischen Absender und Empfänger gewährleistet. Beispielsweise kommuniziert die Verarbeitungseinheit mit den weiteren Modulen über diesen Bus. Hierbei werden die Module über die ihnen zugewiesene Adresse angesprochen.

Meist wird gleichzeitig mit der Adressvergabe implizit auch die Zuordnung der Modulfunktion verbunden, die mit der Modul-Hardware und der externen Verdrahtung korrespondieren muss. Bei universell einsetzbaren speicherprogrammierbaren Steuerungen haben sich selbstaufbauende Busse durchgesetzt. Das heißt, die Adressvergabe erfolgt automatisch während des Hochlaufens des Systems. Sie erfolgt hierbei basierend auf der Steckplatzreihenfolge der Steuerungsmodule. Der große Vorteil der selbstaufbauenden Busse ist die Zeitersparnis bei der Inbetriebnahme und der Fehlersuche, da keinerlei Bedienhandlung notwendig ist und so auch Fehleinstellungen vermieden werden. Nachteilig ist, dass für die Adressvergabe entweder das Vorhandensein von Nachbarmodulen vorausgesetzt wird, oder falls ein Betrieb mit mehreren leeren Steckplätzen möglich sein soll, dann ein aktiver Rückwandbus mit entsprechend höherem Aufwand notwendig ist.

Bisher ist beispielsweise ein Betrieb mit mehreren leeren Steckplätzen am passiven Rückwandbus nur dann möglich, wenn die Module vor Inbetriebnahme eine eindeutige permanente Kennzeichnung erhalten haben. Dies ist jedoch aufwändig und es geht dabei der Bezug zum aktuellen Steckplatz verloren und es entstehen dadurch schwer lokalisierbare Fehlerquellen.

Heutzutage erfolgt die Adressvergabe in der Regel auf drei verschiedenen Wegen: Bei der Vergabe einer permanenten Adresse erhält vor Inbetriebnahme jedes Steuerungsmodul eine eindeutige Adresse. Dies kann eine mittels Wahlschalter eingestellte oder eine per Knotentaufe gespeicherte Adresse sein. Die Nachteile hierbei sind ein erhöhter Aufwand für die Projektierung, Inbetriebnahme und Dokumentation und ein höheres Risiko für Fehleinstellungen und die damit verbundene Fehlersuche. Im Servicefall sind selbst gleichartige Module nicht gegeneinander austauschbar, weil das neue Modul entweder keine oder eine andere eindeutige Adresse hat und diese vorher vergeben werden muss. Nachteilig ist weiterhin, dass keine feste Zuordnung zwischen der Moduladresse (Daten) und der Modulfunktion (Verdrahtung zu Aktor bzw. Sensor) gegeben ist.

Bei der Adressierung über den Nachbarn erhält jedes Steuerungsmodul im Hochlauf des Systems automatisch eine eindeutige Adresse. Hierzu gibt es verschiedene Mechanismen, z.B. werden die Module einzeln aktiviert und so nacheinander mit der Adresse versehen. Dieses setzt jedoch voraus, dass der dem zu adressierenden Modul unmittelbare Nachbar vorhanden ist. Bei dieser Version können mit entsprechendem Zusatzaufwand durch eine weitere Verdrahtung bei Bedarf auch ein oder zwei Steckplätze überbrückt werden und so sind begrenzte Lücken im Aufbau möglich. Der Nachteil ist hierbei, dass die Anzahl der Steckplätze, die frei bleiben können oder im laufenden Betrieb gezogen werden dürfen, stark begrenzt ist.

Bei einer Verwendung eines aktiven Rückwandbusses sind in der Rückwandbusverdrahtung aktive Bauteile vorhanden. Diese halten auch bei einem im Steckplatz fehlenden Steuerungsmodul die Kommunikation aufrecht. Die Adressierung ist durch die aktiven Bauteile sichergestellt, da auch ein nicht belegter Steckplatz als Nachbar fungiert und somit eine Adressierung über den jeweiligen Nachbarn möglich ist. Nachteilig ist hierbei, dass ein erhöhter Aufwand im Rückwandbus getrieben werden muss. Die Verfügbarkeit (MTBF) der Rückwandbusmodule sinkt drastisch, weil sie nicht mehr rein passiv sind. Im Servicefall sind die aktiven Rückwandbusmodule nicht im laufenden Betrieb austauschbar, da ansonsten die gesamte Kommunikation unterbrochen werden würde. In der US 2005/010698 A1 ist ein Verfahren zur Steckplatzerkennung nach dem Oberbegriff des Patentanspruchs 1 offenbart. Nachteilig an diesem Verfahren ist es, dass wenn viele Steuerungsmodule adressiert werden sollen, müssen zwei Datenworte hintereinander auf den Bus geschickt werden, welches zu einem erhöhten Rechenaufwand führt.

Der Erfindung liegt daher die Aufgabe zugrunde, eine eindeutige und einfache Adressierung von Steuerungsmodulen über deren Steckplätze zu vereinfachen.

Die Aufgabe wird durch die Merkmalskombination des Anspruchs 1 gelöst.

Der Erfindung liegt die Erkenntnis zugrunde, dass über die Verwendung eines Datenmusters, welches über eine Anzahl von Busleitungen über den Kommunikationsbus versendet wird, eine eindeutige Steckplatzerkennung ermöglicht wird, wenn die Busleitungen beim Übergang von einem zum nächsten Steckplatz vertauscht (permutiert) werden. Ziel ist es dabei, dass das am Bus angelegte Datenmuster derart verändert wird, dass es innerhalb aller vorhandenen Steckplätze unterschiedlich und damit eindeutig ist. Auf diese Weise kann allen vorhandenen Steckplätzen eine eindeutige Adresse zugewiesen werden, über die das dann an den Steckplatz gesteckte Steuerungsmodul im Rahmen der Kommunikation angesprochen werden kann und Daten empfangen oder senden kann. Hierfür werden eine Mehrzahl von Busleitungen verwendet, an die alle Busteilnehmer per Abzweig angeschlossen sind (Multidrop). Damit sind alle Teilnehmer erreichbar, unabhängig davon, ob einzelne oder mehrere Steckplätze leer bleiben.

Dadurch, dass die Busleitungen in Gruppen unterteilt werden, und dass die Busleitungen nur innerhalb jeder Gruppe untereinander vertauscht werden, können mehr Steuerungsmodule addressiert werden. Dies ist besonders vorteilhaft, wenn eine hohe Anzahl von Steckplätzen mit einer Adresse versorgt werden soll. Damit alle Steckplätze eine eindeutige Adresse bekommen, muss bei einer einfachen Rotation der Busleitungen für eine Anzahl von n-Steckplätzen auch eine Anzahl von n-Busleitungen vorhanden sein. Dies ist relativ aufwendig. Daher werden die Busleitungen in Gruppen unterteilt und die Leitungsrotation wird nur innerhalb einer jeden Gruppe durchgeführt. Innerhalb der Gruppe wird die Rotation solange durchgeführt, bis alle Permutationen des Datenmusters einmal vorgekommen sind und anschließend wird der Vorgang für die Gruppe wiederholt. Eine Gruppe hat somit einen bestimmten Zyklus, nachdem die vorkommenden Datenmuster sich wiederholen. Um nun eine möglichst hohe Anzahl von Adressen für Steckplätze zur Verfügung zu stellen, werden Gruppen mit unterschiedlicher Anzahl von Busleitungen gebildet. Dies führt dazu, dass die Zyklen, nach denen sich die Datenmuster innerhalb der Gruppen wiederholen, unterschiedlich sind. Hierdurch wird gewährleistet, dass an einem Steckplatz im System immer unterschiedliche Datenmuster aus verschiedenen Gruppen zusammenkommen und dass somit gesamte Datenmuster an einem Steckplatz unterschiedlich ist und eine eindeutige Adressvergabe erfolgen kann.

Dadurch, dass die Steckplätze selbst zur Erkennung der Adresse genutzt werden, indem von Steckplatz zu Steckplatz das Datenmuster geändert wird, ist es nicht notwendig, dass in den Steckplätzen für die Adressierung jeweils ein Steuerungsmodul gesteckt ist. Es ist auch möglich, während des laufenden Betriebes des Steuerungsgerätes einzelne Module zu ziehen, auszutauschen oder hinzuzufügen. Eine erneute Taufe und die Vergabe einer Adresse sind in diesem Fall nicht notwendig, da die eigentliche Adressvergabe über den Steckplatz selbst erfolgt. Dies wird dadurch gewährleistet, dass beispielsweise das am Kommunikationsbus anliegende Datenmuster als Adresse des Steckplatzes genutzt wird. Alternativ wird eine aufsteigende Nummer zugeordnet, welches eine effektive und übersichtliche Lösung darstellt.

Eine weitere vorteilhafte Ausbildung der Erfindung ist dadurch gekennzeichnet, dass die Anordnung der Busleitungen beim Übergang von einem zum nächsten Steckplatz in einer festgelegten Reihenfolge vertauscht wird. Hierdurch kann vorher festgelegt werden, welche Adressen den jeweiligen Steckplätzen nacheinander zugewiesen werden, da vorher bestimmt werden kann, in welcher Weise das Datenmuster sich ändert durch das Vertauschen der Datenleitungen. Eine eindeutige und definierte Adressvergebung an die Steckplätze und damit die Steuerungsmodule ist somit möglich.

Die Adresse eines Steckplatzes wird somit vorteilhaft aus einem an dem Steckplatz anliegenden Datenmuster gebildet, welches sich aus allen in den Gruppen anliegenden Datenmustern zusammensetzt, wobei diese Datenmuster durch die Verschiebung der Rotationszyklen in den Gruppen unterscheiden und die Steckplatzerkennung bzw. Adressierung somit eindeutig ist.

Eine weitere vorteilhafte Ausbildung der Erfindung ist dadurch gekennzeichnet, dass das Datenmuster für den ersten Steckplatz von einem Master ausgegeben wird, wobei innerhalb jeder Gruppe eine Busleitung mit logisch 1 belegt ist und alle anderen Busleitungen der Gruppe mit logisch 0 belegt sind. Hierdurch kann auf einfache Weise aus dem dualen bzw. binären Datenmuster, welches an einem Steckplatz vorliegt, die Steckplatzadresse über eine Zuordnungstabelle bestimmt werden.

Eine weitere vorteilhafte Ausbildung der Erfindung ist dadurch gekennzeichnet, dass zusätzlich zu den Datenmustern für die Steckplatzerkennung auch Nutzdaten über die Busleitung übertragen werden. Das Verfahren ermöglicht somit nicht nur eine einfache Adressierung und damit eine Erkennung der Steuerungsmodule, es können vielmehr von und zu den Steuerungsmodulen gleichzeitig auch Nutzdaten, beispielsweise Sensor-Aktorwerte übertragen werden. Somit ist eine effiziente Nutzung des Bussystems möglich. Hierbei kann innerhalb eines Datentelegramms, beispielsweise das Datenmuster für die Steckplatzerkennung durch eine spezielle Sequenz gekennzeichnet sein. Dies ermöglicht den Busteilnehmern beim Lesen des Datentelegramms zu erkennen, ob Nutzdaten vorliegen, oder ob ein spezielles Datenmuster gesendet wird, welches zur Adressierung der Steckplätze verwendet wird. Des Weiteren kann die Erkennungssequenz gegen Übertragungsfehler gesichert sein. Dies ist besonders wichtig für eine korrekte und zuverlässige Adressierung sämtlicher Steckplätze. Wenn die Sequenz, die das für die Adressierung relevante Datenmuster ankündigt gegen Übertragungsfehler gesichert ist, beispielsweise durch Hash-Wert-Bildung, so ist auch sichergestellt, dass die Adressierung der einzelnen Steckplätze und damit der Steuerungsmodule richtig erfolgt.

Eine weitere vorteilhafte Ausbildung der Erfindung ist dadurch gekennzeichnet, dass die Sequenz zyklisch übertragen wird. Dies ist besonders günstig, wenn Steuerungsmodule im laufenden Betrieb gewechselt werden, da sie regelmäßig wieder mit dem Datenmuster für die Adressierung versorgt werden und somit auch nach Austausch eines Moduls eine Adressierung nach einem gewissen Zeitraum gewährleistet ist. Die neuen Steuerungsmodule erkennen in diesem Fall ihren Steckplatz im Hochlauf oder nach dem Stecken selbst, ohne dass eine zusätzliche Interaktion mit dem Master notwendig ist.

Nach dem Erkennen des Steckplatzes können Multiplexer die Datenleitungen in die ursprüngliche Reihenfolge zurückschalten, so dass die physikalische Vertauschung am Bus für den weiteren Datenverkehr nicht hinderlich ist. Die Vorteile des erfindungsgemäßen Systems bestehen vor allem in der hohen Verfügbarkeit und der modularen Erweiterbarkeit des Steuerungsgeräts bei Verwendung einer passiven modularen Rückwandbusverdrahtung.

Dies ist eine wesentliche Eigenschaft der vorliegenden Erfindung. Die Erfindung ermöglicht nicht nur die Adressierung von Steuerungsmodulen an vorhandenen Steckplätzen, sondern erlaubt auch eine modulare Bereitstellung bzw. Erweiterung der nutzbaren Steckplätze aus immer gleichen Teilen. Hier kommt ein Platzvorteil zur Geltung, da genau so viele Steckplätze konfiguriert werden können wie für die spezielle Applikation notwendig ist. Im Gegensatz dazu steht z.B. eine Lösung mit einer Backplane für eine feste Anzahl von Steckplätzen, die immer den gleichen Platzbedarf hat.

Es besteht ein geringer Protokollaufwand, da der Bus selbstaufbauend ist und die Adressierung schnell und einfach und automatisch erfolgt. Beliebige Busteilnehmer bzw. Steuerungsmodule können im Anlauf des Gesamtsystems fehlen, so dass eine Teilbestückung von Maschinenoptionen ermöglicht wird. Beliebige Busteilnehmer können im laufenden Betrieb auch gezogen und gesteckt werden. Eine eindeutige Adressierung ist trotzdem gewährleistet. Eine sichere Adressvergabe ist außerdem gewährleistet, da keine Mehrfachvergabe bzw. Verwechslung von Adressen möglich ist. Dies vereinfacht u.a. die Realisierung sicherheitsrelevanter Applikationen.

Im Folgenden wird die Erfindung anhand der Figuren näher beschieben und erläutert. Es zeigen:
- FIG 1: eine beispielhafte Rotation bei vier Busleitungen,
- FIG 2: eine Rotation von Busleitungen innerhalb von zwei Gruppen mit unterschiedlicher Gruppenbreite,
- FIG 3: eine Tabelle für eine optimale Gruppenkonfiguration für eine maximale Anzahl von Steckplätzen,
- FIG 4: eine beispielhafte Rotation von Busleitungen in zwei Gruppen mit unterschiedlicher Gruppenbreite,
- FIG 5: ein Datenmuster für zwei Gruppen mit unterschiedli- cher Gruppenbreite,
- FIG 6: eine Zuordnungstabelle für die Zuordnung von Steck- plätzen zu einem Datenmuster.

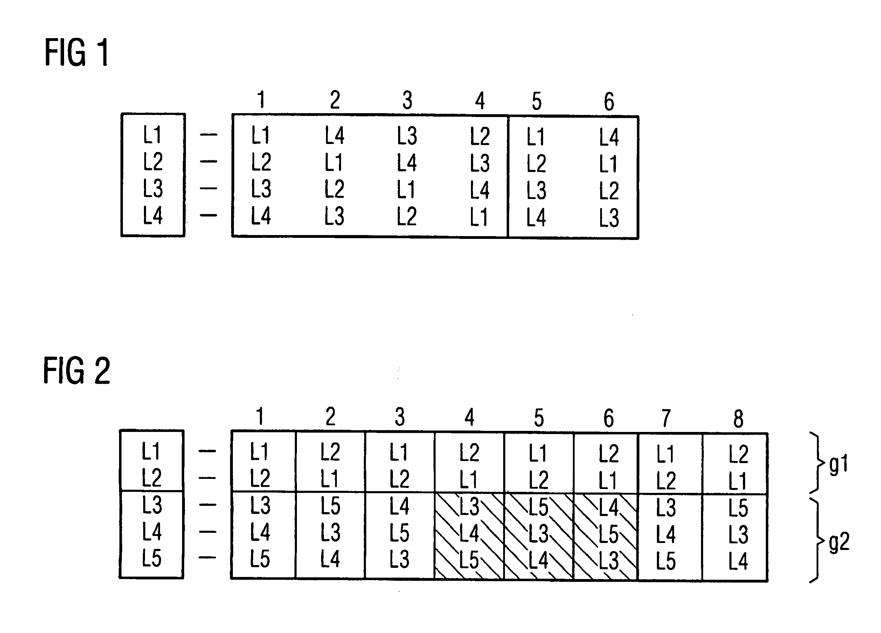

FIG 1 zeigt einen Master, der das Datenmuster für die Busleitungen L1-L4 vorgibt. Des Weiteren sind vier Steckplätze 1, 2, 3, 4 angegeben, welche jeweils eine andere Reihenfolge der Busleitungen L1-L4 aufweisen. So wird zum Beispiel beim Übergang von Steckplatz 1 nach Steckplatz 2 die Reihenfolge der Busleitungen von L1, L2, L3 und L4 rotiert zu L4, L1, L2 und L3. Mit einer Anzahl von vier Busleitungen können somit genau vier Steckplätze durch die Rotation der Busleitungen mit einem eindeutigen Datenmuster versorgt werden.

FIG 2 zeigt eine Versorgung von sechs Steckplätzen 1-6 mit einer eindeutigen Reihenfolge von Busleitungen, wobei für die sechs Steckplätze lediglich fünf Busleitungen verwendet werden müssen. Dies wird dadurch erzielt, dass die Busleitungen in zwei Gruppen aufgeteilt werden. In dem vorliegenden Beispiel wird eine erste Gruppe g1, bestehend aus zwei Busleitungen und eine zweite Gruppe g2, bestehend aus drei Busleitungen gebildet. Die Vorgabe erfolgt auch hier wieder über den Master, welcher das Datenmuster ausgibt. Innerhalb der ersten Gruppe g1 werden die zwei Leitungen von Steckplatz zu Steckplatz vertauscht. Das heißt nach einem Zyklus von zwei Steckplätzen wird wieder das gleiche Muster an den beiden darauffolgenden Steckplätzen 3 und 4 erzeugt. In der Gruppe G2 rotieren die drei Leitungen über drei Steckplätze hinweg. Das heißt nach einem Zyklus von drei Steckplätzen mit einem individuellen Datenmuster wiederholt sich das Datenmuster für die darauffolgenden drei Steckplätze. Werden die Datenmuster der beiden Gruppen g1 und g2 für die Steckplätze jeweils gemeinsam betrachtet, so lassen sich mit den fünf Leitungen sechs Steckplätze eindeutig mit einer Reihenfolge der Leitungen versehen, obwohl innerhalb der Gruppen eine Wiederholung der Datenmuster erfolgt. Für die vorhandenen sechs Steckplätze kommt es bei Verwendung der Datenmuster beider Gruppen jedoch nicht zu einer Wiederholung, wodurch eine eindeutige Adressvergabe gewährleistet ist.

Innerhalb einer Gruppe mit g-Leitungen wiederholt sich ein Datenmuster aller S=g Steckplätze. Dies soll hier als Gruppenzyklus bezeichnet werden. Nun müssen die verschiedenen Gruppenbreiten (gleich Anzahl der zugehörigen Leitungen) möglichst so gewählt werden, dass die Enden der Gruppenzyklen nie alle am gleichen Steckplatz aufeinandertreffen. Spätestens jedoch nach Smax=g1*g2*..gmax Steckplätzen (Produkt aus allen Gruppenbreiten) ist dies unweigerlich der Fall und weitere Steckplätze sind nicht mehr eindeutig adressierbar. Beispielsweise fallen in dem gezeigten Beispiel in FIG 2 die Enden beider Gruppenzyklen nach dem 6. Steckplatz zusammen, danach ist bei Verwendung von lediglich von fünf Leitungen keine eindeutige Steckplatzadressierung mehr möglich.

Damit die Enden der Gruppenzyklen nicht schon vor Smax aufeinander fallen, darf das kleinste gemeinsame Vielfache kgV aus allen Gruppenbreiten kgV(gl..gmax) nicht kleiner als Smax sein. Eine optimale Konfiguration ist also dann erreicht, wenn die Bedingung kgV(g1..gmax)=g1*g2*..gmax erfüllt ist. Dann ergeben sich die Anzahl der benötigten Leitungen zu n=g1+g2+..gmax und die Anzahl der betreibbaren Steckplätze zu Smax=g1*g2*..gmax.

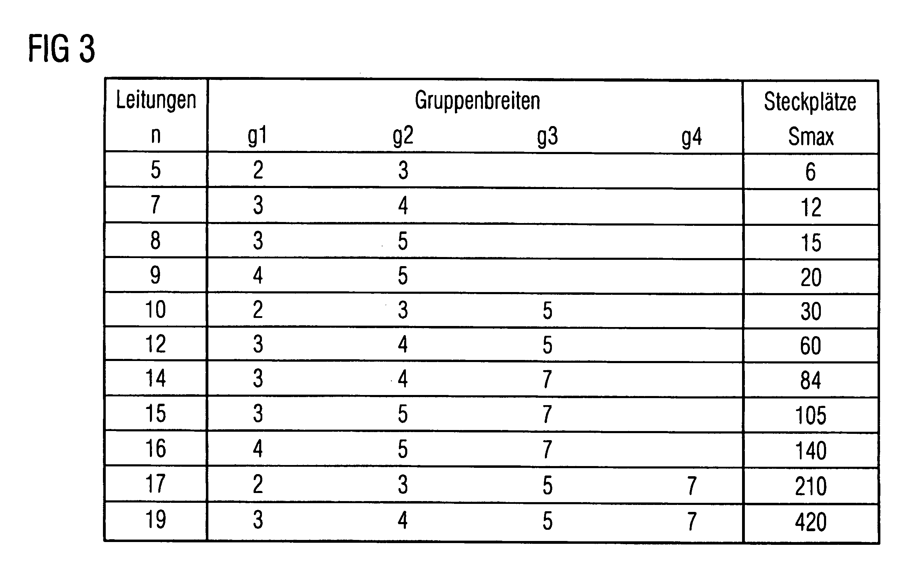

In FIG 3 sind beispielhaft optimale Konfigurationen für eine Anzahl von Steckplätzen gezeigt. Hierbei ist die Anzahl der nutzbaren Steckplätze Smax in Abhängigkeit von der Anzahl der Leitungen angegeben. Für die Anzahl der verwendeten Leitungen ist in der Figur in der Tabelle die optimale Anzahl und Größe der Gruppen angegeben.

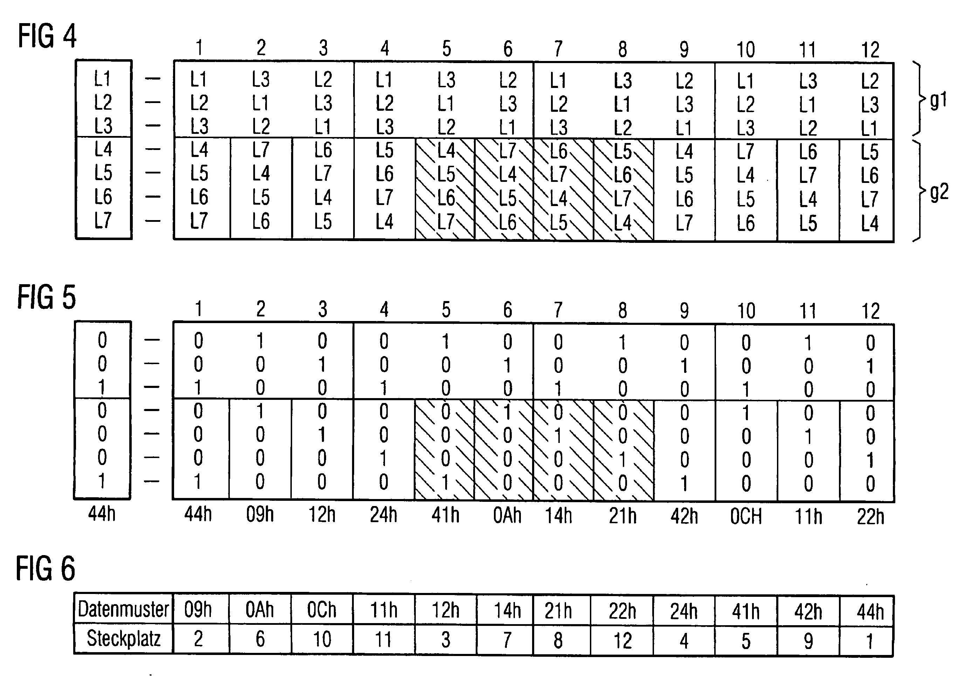

Wird eine nach den oben genannten Regeln aufgebaute Konfiguration genutzt, dann ist sichergestellt, dass sich innerhalb der nutzbaren Steckplätze Smax keine Leitungsreihenfolge wiederholt. Hierbei muss das vom Master ausgegebene Datenmuster derart gewählt werden, dass es an allen Steckplätzen eindeutig bleibt. Dies ist am einfachsten gewährleistet, wenn innerhalb jeder Gruppe nur eine Leitung mit logisch 1 belegt ist und alle anderen logisch 0. Somit lässt sich eine Zuordnungstabelle erstellen, die eine eindeutige Zuordnung des erkannten Datenmusters zum belegten Steckplatz zulässt, wie in FIG 6 beispielhaft gezeigt.

FIG 4 zeigt ein weiteres Ausführungsbeispiel mit sieben Leitungen und zwölf Steckplätzen. Hier wird vom Master vorgegeben, dass zwei Gruppen mit drei und vier Leitungen verwendet werden, wobei die Leitungen in der Gruppe g1 mit drei Leitungen über eine Anzahl von drei Steckplätzen rotiert werden, bevor ein neuer Zyklus beginnt. In der zweiten Gruppe mit vier Leitungen werden die Leitungen über eine Anzahl von vier Steckplätzen rotiert, bevor ein neuer Gruppenzyklus beginnt. Insgesamt können bei einer Verwendung von sieben Leitungen mit einer derartigen Gruppenaufteilung zwölf Steckplätze über eine eindeutige Leitungsreihenfolge mit einer eindeutigen Adresse mit Hilfe des Datenmusters, welches in FIG 5 gezeigt ist adressiert werden.

In FIG 5 ist angegebenen, dass von dem Master innerhalb jeder Gruppe eine der Leitungen mit einer logischen 1 und die andere mit einer logischen 0 belegt sind. Innerhalb der Gruppe mit drei Leitungen rotiert die 1 somit an drei verschiedene Positionen bei den drei verschiedenen Steckplätzen eines Zyklus, wobei die anderen beiden Leitungen jeweils mit 0 belegt sind. Dieses Datenmuster wird dann alle drei Steckplätze fortlaufend wiederholt. Innerhalb der Gruppe mit den vier Busleitungen wird ebenfalls lediglich eine Busleitung mit einer logischen 1 belegt, welche dann über vier Steckplätze an verschiedene Positionen rotiert, während die anderen Busleitungen mit 0 belegt sind. Auch dieses Muster wiederholt sich dann in einem für die Gruppengröße spezifischen Zyklus. Die 12 aufeinanderfolgenden Steckplätze weisen somit jeweils ein spezifisches Datenmuster aus einer Sequenz von 0 und 1 auf. Aus diesem Datenmuster kann über eine Zuordnungstabelle mittels der Übertragung des dualen Systems in ein hexadezimales System eine eindeutige Steckplatzerkennung erfolgen, wie es beispielsweise in der Tabelle in FIG 6 gezeigt ist..

## Patentansprüche

1. Verfahren zur Steckplatzerkennung (S) von Steuerungsmodulen in einem modular aufgebauten Steuerungsgerät, bei dem die Steuerungsmodule über Steckplätze (S) an einen aus mehreren Busleitungen (L) bestehenden Kommunikationsbus angeschlossen sind, bei dem an dem Kommunikationsbus ein Datenmuster angelegt wird und bei dem die Anordnung der Busleitungen beim Übergang von einem zum nächsten Steckplatz vertauscht wird, wodurch das auf dem Kommunikationsbus anliegende Datenmuster sich von einem zum nächsten Steckplatz ändert, bei dem die Anordnung der Busleitungen beim Übergang von einem zum nächsten Steckplatz in einer festgelegten Reihenfolge vertauscht wird, **dadurch gekennzeichnet, dass** die Busleitungen in Gruppen (gl,g2) unterteilt werden und die Busleitungen nur innerhalb jeder Gruppe untereinander vertauscht werden.

2. Verfahren nach Anspruch 1, bei dem das am Kommunikationsbus anliegende Datenmuster als Adresse des Steckplatzes verwendet wird.

3. Verfahren nach Anspruch 1, bei dem die Steckplatznummer als Adresse des Steckplatzes verwendet wird.

4. Verfahren nach einem der Ansprüche 1 bis 3, bei dem die Anzahl der Busleitungen der Gruppen unterschiedlich ist.

5. Verfahren nach einem der vorhergehenden Ansprüche, bei dem die innerhalb einer Gruppe von Busleitungen anliegenden Datenmuster sich wiederholen, bis an allen Steckplätzen ein Datenmuster anliegt.

6. Verfahren nach einem der vorhergehenden Ansprüche, bei dem das an einem Steckplatz anliegende Datenmuster aus allen in den Gruppen anliegenden Datenmustern gebildet wird.

7. Verfahren nach einem der vorhergehenden Ansprüche, bei dem das Datenmuster für den ersten Steckplatz von einem Master ausgegeben wird, wobei innerhalb jeder Gruppe eine Busleitung mit logisch 1 belegt ist und alle anderen Busleitungen der Gruppe mit logisch 0 belegt sind.

8. Verfahren nach einem der vorhergehenden Ansprüche, bei dem das am Steckplatz erkannte Datenmuster eine eindeutige Zuordnung zur belegten Steckplatznummer über eine Zuordnungstabelle ermöglicht.

9. Verfahren nach einem der vorhergehenden Ansprüche, bei dem zusätzlich zu den Datenmustern Nutzdaten über die Busleitungen übertragen werden.

10. Verfahren nach Anspruch 9, bei dem die Datenmuster für die Steckplatzerkennung durch eine spezielle Sequenz **gekennzeichnet** sind.

11. Verfahren nach Anspruch 10, bei dem die Sequenz gegen Übertragungsfehler gesichert ist.

12. Verfahren nach Anspruch 10 oder 11, bei dem die Sequenz zyklisch übertragen wird.

13. Verfahren nach einem der vorhergehenden Ansprüche, bei dem die Steckplätze selbst modular aufgebaut sind.

## Claims

1. Method for slot identification (S) of control modules in a modular controller, in which the control modules are connected via slots (S) to a communication bus which consists of a plurality of bus lines (L), in which a data pattern is applied to the communication bus, and in which the arrangement of the bus lines is interchanged at the transition from one slot to the next, as a result of which the data pattern which is applied to the communication bus changes from one slot to the next, in which the arrangement of the bus lines is interchanged in a defined sequence at the transition from one slot to the next, **characterized in that** the bus lines are subdivided into groups (g1, g2), and the bus lines are interchanged with one another only within each group.

2. Method according to Claim 1, in which the data pattern which is applied to the communication bus is used as the address of the slot.

3. Method according to Claim 1, in which the slot number is used as the address of the slot.

4. Method according to one of Claims 1 to 3, in which the number of bus lines in the groups is different.

5. Method according to one of the preceding claims, in which the data patterns which are applied within a group of bus lines are repeated until a data pattern has been applied to all the slots.

6. Method according to one of the preceding claims, in which the data pattern which is applied to a slot is formed from all the data patterns which are present in the groups.

7. Method according to one of the preceding claims, in which the data pattern for the first slot is output by a master, with one bus line within each group being allocated logic 1, and all the other bus lines in the group being allocated logic 0.

8. Method according to one of the preceding claims, in which the data pattern which is identified at the slot allows unique association with the allocated slot number via an association table.

9. Method according to one of the preceding claims, in which, in addition to the data patterns, payload data is transmitted via the buslines.

10. Method according to Claim 9, in which the data patterns for slot identification are identified by a specific sequence.

11. Method according to Claim 10, in which the sequence is protected against transmission errors.

12. Method according to Claim 10 or 11, in which the sequence is transmitted cyclically.

13. Method according to one of the preceding claims, in which the slots are themselves modular.

## Revendications

1. Procédé de reconnaissance de position ( S ) enfichable de modules (S) de commande dans un appareil de commande modulaire, dans lequel les modules de commande sont raccordés par des positions ( S ) d'enfichage à un bus de communication composé de plusieurs lignes ( L ) de bus, dans lequel on applique un modèle de données au bus de communication et dans lequel on change l'agencement des lignes de bus lors du passage d'une position d'enfichage à la suivante, de sorte que le modèle de données s'appliquant au bus de communication change d'une position d'enfichage à la suivante, dans lequel on change, suivant un ordre de succession fixé, l'agencement des lignes de bus lors du passage d'une position d'enfichage à la suivante, **caractérisé en ce que** l'on subdivise les lignes de bus en groupe ( g1, g2 ) et on n'interchange les lignes de bus qu'à l'intérieur de chaque groupe.

2. Procédé suivant la revendication 1, dans lequel on utilise le modèle de données s'appliquant au bus de communication comme adresse de la position d'enfichage.

3. Procédé suivant la revendication 1, dans lequel on utilise le numéro de la position d'enfichage comme adresse de la position d'enfichage.

4. Procédé suivant l'une des revendications 1 à 3, dans lequel le nombre des lignes de bus est différent suivant les groupes.

5. Procédé suivant l'une des revendications précédentes, dans lequel le modèle de données s'appliquant dans un groupe de lignes de bus se répète jusqu'à ce qu'un modèle de données s'applique à toutes les positions d'enfichage.

6. Procédé suivant l'une des revendications précédentes, dans lequel le modèle de données s'appliquant à une position d'enfichage est formé de tous les modèles de données s'appliquant dans les groupes.

7. Procédé suivant l'une des revendications précédentes, dans lequel le modèle de données pour la première position d'enfichage est émis par un maître, dans lequel à l'intérieur de chaque groupe une ligne de bus est occupée par un 1 logique et toutes les autres lignes de bus du groupe sont occupées par un 0 logique.

8. Procédé suivant l'une des revendications précédentes, dans lequel le modèle de données, reconnu à la position d'enfichage, rend possible une affectation uniforme au numéro de position d'enfichage occupée par l'intermédiaire d'une table d'affectation.

9. Procédé suivant l'une des revendications précédentes, dans lequel on transmet supplémentairement aux modèles de données, des données utiles par les lignes de bus.

10. Procédé suivant la revendication 9, dans lequel les modèles de données pour la reconnaissance de position d'enfichage sont **caractérisés par** une séquence spéciale.

11. Procédé suivant la revendication 10, dans lequel la séquence est assurée vis-à-vis d'une erreur de transmission.

12. Procédé suivant la revendication 10 ou 11, dans lequel on transmet la séquence cycliquement.

13. Procédé suivant l'une des revendications précédentes, dans lequel les positions d'enfichage, elles-mêmes, sont modulaires.
